(19) **Europäisches Patentamt**
**European Patent Office**
**Office européen des brevets**

(11) **EP 2 790 460 B1**

(12) **FASCICULE DE BREVET EUROPEEN**

(45) Date de publication et mention
de la délivrance du brevet:
**10.01.2018 Bulletin 2018/02**

(51) Int Cl.:
*H04W 84/18* (2009.01)    *H04W 72/08* (2009.01)
*H04L 12/24* (2006.01)

(21) Numéro de dépôt: **14163701.7**

(22) Date de dépôt: **07.04.2014**

(54) **PROCÉDÉ DISTRIBUÉ POUR SÉLECTIONNER UNE CONFIGURATION DANS LES RÉSEAUX MOBILES**

DEZENTRALE VERFAHREN, UM EINE KONFIGURATION IN MOBILFUNKNETZEN WÄHLEN

DISTRIBUTED PROCESS TO SELECT A CONFIGURATION IN MOBILE NETWORKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2013 FR 1300804**

(43) Date de publication de la demande:
**15.10.2014 Bulletin 2014/42**

(73) Titulaire: **Thales**
**92400 Courbevoie (FR)**

(72) Inventeurs:
• **Rose, Luca**
**92622 Gennevilliers Cedex (FR)**
• **Le Martret, Christophe**
**92622 Gennevilliers Cedex (FR)**
• **Debbah, Mérouane**
**91192 Gif Sur Yvette (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A1-2009/018251    WO-A1-2013/000068**

• **HO TING CHENG ET AL: "Pareto optimal resource management for wireless mesh networks with QoS assurance: Joint node clustering and subcarrier allocation", IEEE TRANSACTIONS ON WIRELESS COMMUNICATIONS, IEEE SERVICE CENTER, PISCATAWAY, NJ, US, vol. 8, no. 3, 1 mars 2009 (2009-03-01), pages 1573-1583, XP011253460, ISSN: 1536-1276**

EP 2 790 460 B1

## Description

L'objet de l'invention concerne un procédé distribué pour sélectionner une ou plusieurs configurations dans des réseaux mobiles composés de plusieurs groupes de noeuds ou utilisateurs communiquant entre eux, chaque groupe possédant un chef de groupe. Les noeuds ou utilisateurs communiquent au sein d'un groupe ou cluster entre eux par des liaisons de communication classiques.

L'invention s'applique dans le cadre des réseaux sans fil décentralisés. Elle peut aussi être mise en oeuvre dans tout système de communication respectant les règles de communication sans avoir l'aide d'un contrôleur central de réseau. Par exemple, on peut envisager appliquer le procédé à des petites cellules réseau, des réseaux mobiles ad-hoc, des réseaux dans lesquels les dispositifs de communication requièrent une configuration performante et peu consommatrice de ressources.

Le terme « distribué » fait référence au fait que les décisions sont prises au sein d'un groupe ou cluster ces deux termes désignant un même élément.

Le terme configuration des noeuds au sein d'un cluster désigne l'ensemble des paramètres de configuration que l'équipement peut prendre en compte, par exemple, des canaux de communication, la puissance choisie au niveau d'un noeud pour l'émission, etc. On utilisera l'expression « paramètre de ressource radio » un paramètre représentatif de la ressource radio, telle que la fréquence d'émission, la puissance, le procédé de codage, la modulation utilisée.

Les réseaux concernés par la présente invention sont des réseaux divisés en plusieurs groupes ou clusters. Chaque cluster comprend plusieurs noeuds et un noeud appelé chef de cluster qui a le rôle d'allocateur de ressources. L'élection de ce chef de cluster se fait par des techniques connues de l'Homme du métier. Ce type de structure permet d'établir des communications ad hoc de pair à pair à l'intérieur et entre les clusters. Une fois les chefs de cluster choisis, les noeuds d'un cluster doivent s'affilier au chef de groupe. Une fois l'organisation du réseau en clusters réalisée, il reste à allouer des ressources radio pour permettre les communications entre les noeuds d'un cluster en assurant les qualités de service requises ou QoS pour les communications. Le chef de cluster détermine, par exemple, le canal de transmission et le niveau de puissance à utiliser par tous les noeuds qui appartiennent à un cluster ou de manière plus générale, une configuration satisfaisante pour ces noeuds.

Un chef de cluster disposant de ressources pour un cluster, il doit allouer aux noeuds membres les ressources pour une ou plusieurs fréquences connues du chef de cluster. Cette opération est complexe en raison de la diversité entre les types de qualité de service QoS requises, par exemple, le délai, le débit, le taux d'erreur, etc. et l'allocation de ressources est souvent posée comme un problème d'optimisation. Une première approche consiste à inclure les caractéristiques de QoS visées dans la fonction objective à optimiser. Une seconde manière d'envisager le problème est de gérer les besoins en QoS comme des contraintes au problème d'optimisation. Dans ce denier cas, certains travaux connus de l'Homme du métier cherchent à atteindre la solution optimale au prix d'une grande complexité calculatoire. D'autres travaux moins complexes ne visent pas l'optimum tout en offrant de bonnes performances. Un exemple de ce type d'approche est de décomposer la fonction d'allocation de ressources en plusieurs étapes : allocation de lien, puis allocation de bande passante, puis éventuellement allocation de sous-porteuses et enfin allocation de schéma de modulation et de codage ou MCS conjointement à la puissance.

La demande de brevet US 2012/0071102 divulgue un système de communication sans fil pour implémenter une approche distribuée, pour partager le spectre des fréquences. Dans cette approche distribuée, les dispositifs individuels de communication sans fils vont négocier des accords pour l'utilisation du spectre disponible sans faire intervenir une autorité centralisée. Les dispositifs sans fils seront par exemple configurés pour augmenter les débits d'information de leurs transmissions respectives sous contraintes prédéterminées. Ces contraintes prédéterminées peuvent inclure des contraintes de puissance transmises, des contraintes d'interférences, par exemple.

Le document ayant pour auteur Ho Ting Cheng et al. et intitulé« Pareto Optimal Resource Management for Wireless Mesh Networks with QoS Assurance : Joint Node Clustering and Subcarrier Allocation » concerne un algorithme pour l'allocation de sous-porteuses dans des réseaux Mesh.

L'enseignement technique du document WO 2009/018251 concerne un procédé permettant de déterminer des clusters dans un réseau comprenant des backhauls.

La demande de brevet WO 2013/000068 décrit un procédé permettant de déterminer des réseaux de clusters dans un réseau sans fil de type Backhaul.

Les systèmes et procédés de l'art antérieur connus du Demandeur ne permettent pas, a priori, de sélectionner une configuration de système optimale en présence de contraintes de fonctionnement. Ils ne prévoient pas de définir et gérer de manière conjointe la fréquence ou le canal logique et les autres paramètres de configuration.

L'idée de la présente invention consiste notamment à collecter au niveau de chaque noeud ou lien et/ou d'un ensemble de noeuds et de liens d'un cluster, la valeur d'un paramètre de ressources radio au niveau d'un noeud ou d'un lien au sein d'un cluster, et de déterminer à partir de cette valeur une configuration optimale pour les noeuds notamment en termes de qualité de service.

L'invention concerne un procédé pour déterminer la configuration d'un ensemble de noeuds Ni et/ou liens regroupés au sein d'un cluster possédant un chef de cluster, CHk, au cluster étant associée une valeur de contrainte telle que la qualité de service QoS à vérifier et des ressources radio, le procédé est caractérisé en ce qu'il comporte au moins les étapes suivantes :

- connaissant un ensemble de canaux de fonctionnement, déclencher une requête d'information en interrogeant un ou plusieurs noeuds Ni et/ou de liens et demander auxdits noeuds et/ou liens d'évaluer pour chaque canal de communication un indice $I_l[c]$ de qualité de communication pour un noeud ou un lien entre deux noeuds du cluster, puis sélectionner une configuration lorsque le chef de cluster a reçu les indices de qualité de communication,
- le chef de cluster vérifie si les indices de qualité reçus sont conformes à la contrainte donnée pour le cluster, et retient les indices qui satisfont le plus grand nombre de noeuds Ni ou de liens, en minimisant la consommation des ressources,
- si la configuration retenue satisfait l'ensemble des noeuds Ni ou de liens interrogés, alors le chef de cluster va mettre à jour la liste f des canaux de communication et va implémenter cette configuration pour les noeuds ou liens du cluster,
- si non, alors le chef de cluster va soit mettre à jour la liste des canaux de communication, soit rester dans la configuration initiale de l'ensemble des noeuds et/ou des liens.

La requête d'information est, par exemple, déclenchée sur réception d'une alarme au niveau du chef de cluster traduisant un nombre de noeuds ou liens du cluster non satisfaits par la configuration choisie.

Selon une variante, un noeud ou lien comptabilise le nombre de fois où l'indice de qualité mesuré ne permet pas de vérifier la contrainte requise et transmet une valeur d'alarme au chef de cluster si la valeur de la contrainte n'est pas vérifiée un nombre $n_a$ fois donné.

Lorsque le chef de cluster ne trouve pas de configuration adaptée, d), alors, il vérifie s'il existe une autre configuration parmi plusieurs sous-ensembles de configuration prédéfinis, en testant les sous-ensembles selon un ordre de priorité donné.

La requête d'information peut être déclenchée par une procédure de déclenchement hors alarme en tirant une valeur aléatoire A uniformément répartie entre deux valeurs [0, 1] et si la valeur A est inférieure à une valeur de probabilité donnée, alors on déclenche la procédure de requête d'information.

Selon une autre variante de réalisation, la requête d'information est déclenchée en utilisant un mode déterministe dans lequel on définit une loi de variation de probabilité pour le cluster k associée au déclenchement de requête d'information.

On utilise, par exemple, une loi de variation où $\Pi_k(t)=1$ à des instants déterminés et $\Pi_k(t)=0$ sinon, avec $\Pi_k(t)$ la probabilité de déclencher une procédure de requête d'information pour le cluster k

Le chef de cluster demande aux noeuds ou liens de lui transmettre les rapports puissance de gain/bruit plus interférence $Q_m^s$ pour tous les canaux m possibles de la liste préétablie:

$$\boldsymbol{Q}_m^k = (Q_m^k(1), Q_m^k(2), \ldots, Q_m^k(F))$$

où chaque élément du vecteur est défini comme

$$Q_m^k(s) = \frac{G^s(m, m)}{\sigma^2 + MAI_{m,s}}$$

$G^s(m,m)$ représente le gain en puissance du canal du lien m appartenant au cluster *k*, pour le canal s, et $MAI_{m,s}$ l'interférence d'accès multiple, définie comme :

$$MAI_{m,s} = \sum_{h \in K \setminus k} \mathbb{1}\{C_h = s\} \left( \sum_{l \in N_h} P_h G^s(l, m) \right)$$

où $G^S(l,m)$ représente le gain en puissance du canal entre l'émetteur du lien I et le récepteur du lien et 1{.} correspond à une fonction indicateur standard,

le chef de cluster, à partir des vecteurs reçus $\boldsymbol{Q}_m^k$, organise, par exemple, les vecteurs reçus $\boldsymbol{Q}_m^k$ dans une matrice

G, $\mathbf{G}$(l,f) indique l'élément sur la $\ell$-ème ligne (lien) et la f-ième colonne (canal) de la matrice, l'élément est égal au f-ième élément du vecteur $\boldsymbol{Q}_\ell^k$ :

$$G = \begin{bmatrix} Q_1^k(1) & Q_1^k(2) & \dots & Q_1^k(F) \\ Q_2^k(1) & \dots & & \\ \dots & & \dots & \\ Q_{L_k}^k(1) & & & Q_{L_k}^k(F) \end{bmatrix}$$

après, il évalue le nombre maximum de liens qui vont permettre de satisfaire la qualité de service,

$$L_{MAX} = \max_f \sum_\ell 1\{P_{MAX}G(\ell,f) \geq \Gamma_\ell\}$$

après, la matrice G' est construite en mettent à zéro toutes le colonnes de G où $\sum_\ell 1\{P_{MAX}G(\ell,f) \geq \Gamma_\ell\} < L_{MAX}$, le chef de cluster choisit ensuite une valeur particulière f* en fonction des besoins du réseau ainsi que la configuration $C_\ell$ pour chaque lien $\ell$ à partir de la matrice G $(\ell, f^*)$.

Par exemple, le chef de cluster, utilise un critère min-max. C'est-à-dire qu'il sélectionne la valeur minimale du lien $\ell^*$ et le canal f* en utilisant l'expression :

$$\begin{cases} \ell^* = \arg\min_\ell \left\{ \dfrac{\mathbf{G}'(\ell,\mathrm{f})}{\Gamma_\ell} \text{ tel que } \dfrac{P_{MAX}\,\mathbf{G}'(\ell,\mathrm{f})}{\Gamma_\ell} \geq 1 \right\} \\ f^* = \arg\max_f \dfrac{\mathbf{G}'(\ell^*,f)}{\Gamma_{\ell^*}} \end{cases},$$

puis le chef de cluster attribue à chaque lien une puissance pour la communication:

$$P_\ell = \left\lceil \dfrac{\Gamma_\ell}{\mathbf{G}'(\ell,\mathrm{f}^*)} \right\rceil,$$

où l'opérateur de quantification $\lceil . \rceil$ donne la plus petite valeur de puissance quantifiée supérieure à $\Gamma_\ell/(\mathbf{G}'(\ell,\mathrm{f}^*))$.

Les liens $\ell$ tels que $P_{MAX}\mathbf{G}'(\ell,\mathrm{f}^*) < \Gamma_\ell$ sont mis à zéro en leur attribuant une puissance nulle $P_\ell = 0$.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1, une représentation de plusieurs clusters indépendants les uns des autres, un cluster comprenant un ensemble de noeuds et d'un chef de cluster,
- La figure 2, une représentation des procédures et étapes mises en oeuvre par le procédé selon l'invention, et

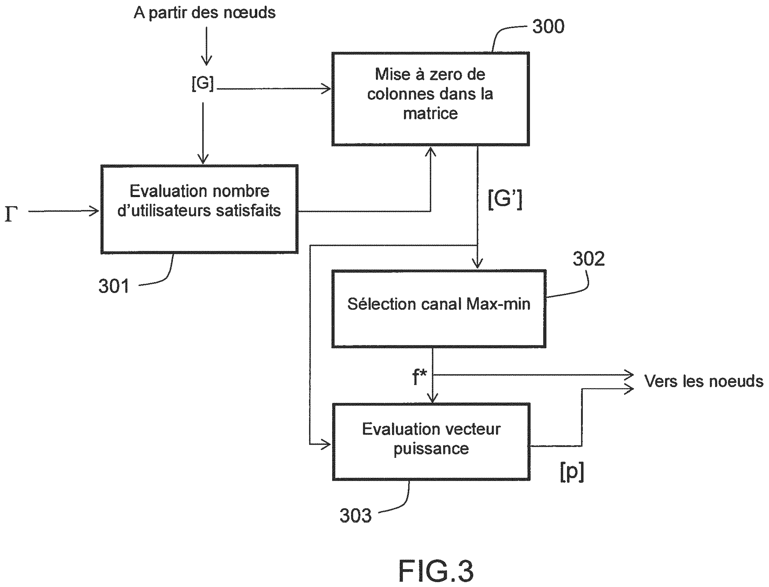

- La figure 3, un exemple donné lorsque l'on considère comme paramètre le rapport de puissance.

Dans les exemples qui vont être donnés à titre illustratif et nullement limitatifs, on va par exemple chercher à optimiser la configuration des noeuds d'un cluster pour respecter une contrainte, telle qu'une qualité de service, requise par une application, limiter la puissance utilisée dans les communications internes à un cluster tout en respectant un niveau signal sur bruit plus interférence SINR (Signal to Interference plus Noise Ratio). L'idée va notamment être de déterminer un paramètre de ressource radio qui va conduire à une configuration optimale des noeuds d'un cluster. Par exemple, il sera possible d'assigner une valeur de canal de communication et un niveau de puissance à utiliser pour la transmission des informations entre noeuds du cluster.

Les exemples qui suivent s'appliquent pour des noeuds d'un réseau, des liens ou d'un ensemble de noeuds et de liens.

Le procédé selon l'invention repose notamment sur la mise en oeuvre :

1) d'un premier mode géré par le chef de cluster qui demande aux noeuds qui lui sont rattachés de donner les performances qu'ils reçoivent pour un certain nombre de choix de paramètres, puis ajuste la configuration du réseau en fonction des réponses qu'il reçoit ;

2) d'un deuxième mode d'alarme provenant des noeuds du cluster qui informent le chef de cluster des performances et de leur dégradation par rapport aux contraintes de qualité de service QoS fixées. A partir d'un niveau d'alarme donné, le chef de cluster va passer dans le premier mode qui va redéfinir une configuration des noeuds dans le cluster.

Le procédé selon l'invention présente notamment l'avantage d'adapter la configuration des noeuds du cluster en se basant sur des évaluations réelles.

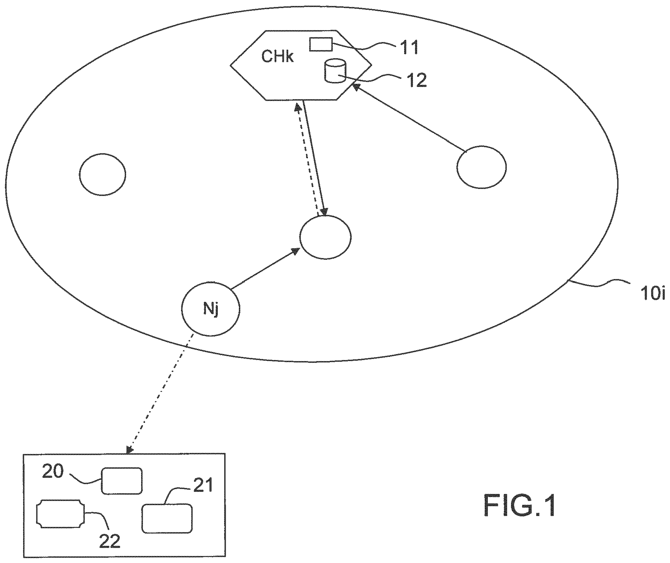

La figure 1 représente un ensemble de clusters dans un réseau de communication sans fil décentralisé. Chaque cluster 10i comprend plusieurs noeuds Nj et un chef de cluster CHk. L'élection du chef de cluster se fait par un procédé connu de l'Homme du métier qui ne sera pas détaillée ici. C'est le chef de cluster qui va décider de la configuration optimale pour réaliser la communication optimale entre les noeuds de son cluster. Les noeuds communiquent entre eux en partageant le spectre total, pouvant créer des interférences. Dans le cas où il y a plusieurs clusters, les interférences peuvent se propager au niveau des autres clusters. Un chef de cluster comprend, par exemple, un processeur 11, une table 12 dans laquelle il peut mémoriser une configuration de noeuds pour une communication entre les noeuds, par exemple, il connait les liens Li,j qui relie le noeud Ni au noeud Nj, et mémorise cette configuration dans un ensemble {(Ni, Nj, Li,j),....}.

Un noeud Nj comprend, par exemple, un émetteur 20 et/ou un récepteur 21, un processeur 22 adapté à exécuter les ordres transmis par le chef de cluster. Le processeur 22 est aussi programmé pour déterminer le nombre de fois où, dans une configuration donnée, il ne peut respecter la contrainte donnée et dans ce cas émettre une alarme vers le chef de cluster.

Les clusters en théorie ne communiquent pas entre eux et n'échangent pas leurs paramètres de fonctionnement.

Pour chaque lien dans un cluster k donné on associe un paramètre $\Gamma_\ell$ qui définit la qualité de service minimale QoS à respecter pour la communication entre les noeuds. Par exemple, $\Gamma_\ell$ peut être un niveau minimum de SINR, une probabilité de recevoir correctement des paquets (mesurée par le contrôle d'un CRC), un débit minimum, etc. dans l'exemple qui suit on considère pour $\Gamma_\ell$ comme le niveau minimum pour la moyenne de SINR.

Le spectre global utilisé pour la communication entre les noeuds au sein d'un cluster est divisé en F canaux orthogonaux. Par exemple, on dispose d'un ensemble C= {1,2, ...F} canaux. Le temps est considéré « discrétisé » et est indexé par la lettre t. A chaque instant, un chef de cluster CHk va sélectionner un canal de communication à utiliser par les émetteurs des noeuds de son cluster. Le canal sélectionné par le chef de cluster CHk est indiqué par Fk appartenant à F.

Le procédé selon l'invention va faire appel à différentes procédures détaillées ci-après pour déterminer une configuration optimale de noeuds au sein d'un cluster.

Les paramètres suivants seront utilisés dans la suite de la description :

1. $\pi_k(t)$ est la probabilité de déclencher une procédure de requête d'information par le chef de cluster pour sélectionner une nouvelle configuration pour les noeuds,

2. $\pi_{min}$ est la valeur minimale de $\pi_k(t)$,

3. $\Gamma_{alarm}$ est la quantité maximale d'alarmes tolérées par le chef de cluster, avant qu'il ne déclenche une nouvelle procédure de configuration de réseau,

4. $n_{alarm_k}(t)$ est la quantité d'alarmes reçues par le chef de cluster à l'instant t,

5. $P_{MAX}$ est la puissance maximale transmise par les noeuds,

6. $\Gamma_\ell$ est un seuil de performance pour le lien $\ell$,

7. $n_a$ correspond aux instants temporels successifs pour lesquels un noeud peut éviter de satisfaire ses contraintes avant de transmettre une alarme.

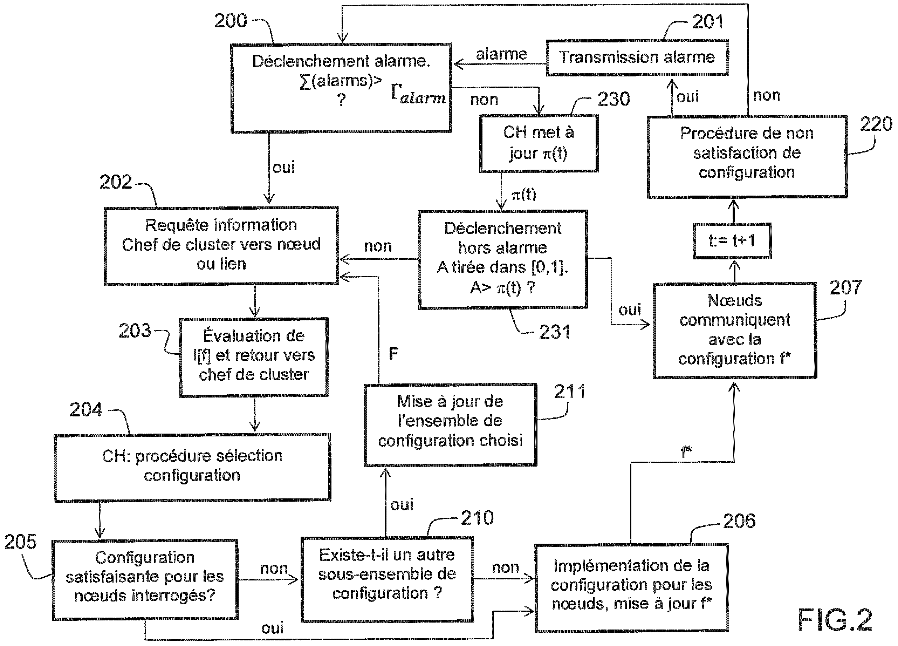

La figure 2 représente l'ensemble de procédures mises en oeuvre dans le procédé selon l'invention.

Initialement, le cluster a une configuration initiale de noeuds communiquant entre eux et de paramètres ressource radio. A un instant t donné, le chef de cluster dispose donc d'une liste de canaux de transmission et d'un ensemble de noeuds qui communiquent entre eux en satisfaisant une qualité de service donnée QoS.

La procédure de « déclenchement alarme » 200, est exécutée par le processeur du chef de cluster sur réception d'un ou de plusieurs signaux d'alarme provenant d'un ou de plusieurs noeuds. Ces signaux d'alarme sont représentatifs d'un paramètre $n_a$ correspondant, par exemple, au nombre de fois où un lien ou un noeud n'a pu respecter la qualité de service requise par le réseau. Le chef de cluster est configuré avec la valeur seuil d'alarme $\Gamma_{alarm}$. Le processeur du chef de cluster reçoit 201 les alarmes issues d'un ou plusieurs noeuds du cluster. Dans le cas où la somme des alarmes dépasse la valeur seuil, alors, le chef de cluster va devoir rechercher une nouvelle configuration pour satisfaire la qualité de service QoS. Pour cela, il va déclencher une procédure « requête d'information » 202 ayant notamment pour objectif de remonter les valeurs des paramètres ressources radio déterminées au niveau des noeuds ou des liens interrogés.

Si la somme des alarmes est inférieure à la valeur seuil d'alarme, alors le chef de cluster va, 230, mettre à jour la valeur de probabilité de déclenchement de procédure de requête d'information et passer à la procédure de déclenchement aléatoire 231.

Le niveau seuil d'alarme $\Gamma_{alarm}$, mesure la quantité maximale que le chef de cluster peut tolérer avant de choisir une nouvelle configuration.

Par exemple, il est possible de choisir comme valeur $\Gamma_{alarm} = 0.8\ N_k$.

La procédure de **«déclenchement hors alarme »**, 231, est exécutée par le processeur du chef de cluster.

Cette procédure peut être réalisée par une procédure de déclenchement aléatoire, par exemple. A un chef de cluster on fait correspondre une valeur $\Pi(t)$ qui représente la probabilité de déclencher une procédure « requête d'information ». Cette valeur peut être codée en dur, définie par le concepteur du réseau, ou codée en logiciel, dépendant de l'optimalité de la configuration. Cette valeur doit être un nombre inférieur à 0.1. Il est ainsi possible de définir une probabilité comme une fonction dépendante du temps pour améliorer la stabilité et la réactivité du système :

$$\pi_k(t) := \begin{cases} \max\left(\dfrac{\pi_k(t-1)}{2}, \pi_{\min\_} \right) & \text{if } n_{alarm_k}(t) = 0 \\ \min(2\,\pi_k(t-1), 1) & \text{if } n_{alarm_k}(t) > 0 \end{cases}$$

$\Pi_k(t)$ correspond à la probabilité associée au cluster k où $\pi_{\min}$ est la valeur minimale pour la recherche de nouvelles configurations.

La probabilité de changement de configuration mesure à quelle fréquence un chef de cluster tente d'améliorer les performances du réseau en sélectionnant une nouvelle configuration. Par exemple, il est possible de fixer $\pi(t) = 0.01$.

On sélectionne le mode aléatoire, par exemple, en tirant une variable aléatoire A uniformément répartie entre 0 et 1 et on compare cette valeur à $\Pi_k(t)$, Si la valeur A est supérieure à $\Pi_k(t)$, alors on ne déclenche pas la procédure de requête d'information. Dans le cas contraire, la procédure de « requête d'information » est déclenchée.

Selon un autre mode de réalisation, on va utiliser un mode déterministe. Pour cela, on va, par exemple, définir une loi de variation de $\Pi_k(t)$ pour le cluster k. Il est ainsi possible, de définir $\Pi_k(t)=1$ à des instants déterminés et $\Pi_k(t)=0$ sinon.

La procédure **de « requête d'information** », 202, démarre sur une décision du chef de cluster recevant des alarmes ou fait suite au résultat de la procédure de déclenchement hors alarme.

En fonction d'un objectif de qualité de service prédéfinie, le chef de cluster demande, 203, aux noeuds Ni faisant partie de la configuration, de lui transmettre un indice de qualité de liaison nécessaire pour définir une configuration optimale, par exemple un vecteur $I_i[c]$ contenant un indice de préférence pour une configuration de réseau. Un noeud va balayer la plage prédéfinie de canaux et acquérir ou mesurer l'indice de qualité de liaison, plus grande est cette valeur, meilleure est la configuration de transmission pour ce lien particulier.

Par exemple, comme indices de qualité, il est possible de prendre la mesure du niveau d'interférences dans chaque canal, ou le gain de puissance moyenne du canal.

La procédure « **sélection de configuration** » 204 est déclenchée une fois que le chef de cluster a reçu tous les vecteurs $I_i[f]$ contenant les indices mesurés pour les différents canaux et les différents liens ou noeuds. Le chef de cluster choisit alors une configuration optimale pour les noeuds du cluster sur la base de ces vecteurs. Il va ensuite, 205, vérifier si la configuration est satisfaisante pour les différents noeuds interrogés ou une majorité de ces noeuds, i.e, pour laquelle les noeuds vont vérifier une qualité de service ou une contrainte donnée.

Si oui, 205, le chef de cluster déclenche la configuration retenue pour les noeuds et met à jour, 206, l'ensemble des canaux de communication f*. Les noeuds vont communiquer avec cette configuration f* de canaux, 207.

Si le chef de cluster ne trouve pas de configuration satisfaisante, alors il va vérifier 210, s'il existe une autre configuration parmi des sous-ensembles de configuration prédéfinis. On numérote ces sous-ensembles, et on teste les sous-ensembles selon, par exemple un ordre croissant ou un ordre de priorité donné. Si cette configuration existe, il va 211, mettre à jour l'ensemble des canaux f, en utilisant les paramètres de cette configuration. Si le procédé ne trouve pas de configuration pour l'ensemble des noeuds, alors il va utiliser la configuration qui satisfait le plus grand nombre de noeuds pour mettre à jour l'ensemble des canaux.

Par exemple, on peut imaginer diviser le spectre en deux ou plusieurs ensembles caractérisés par des niveaux de priorité différents, bande de communication civile, bande de communication militaire. Dans ce cas, le chef de cluster demande aux noeuds de scanner les bandes de priorités faibles. Si aucun canal optimal n'est trouvé, le chef de cluster va demander de scanner d'autres bandes jusqu'à trouver une bande disponible.

Le chef de cluster organise les vecteurs de préférence reçus en une matrice G. Dans cet exemple, la matrice G est telle que G (l, f) correspond au gain de puissance moyenne du canal d'un lien l de communication, sur le canal f. Une ligne de la matrice correspond aux différents liens interrogés par le chef de cluster, une colonne correspond aux différents canaux pour lesquels on a interrogé les noeuds.

Le chef de cluster évalue, 301, le nombre maximum de liens qui satisfont la qualité de service requise :

$$L_{MAX} = \max_f \sum_{\ell} 1_{\{f(G(\ell,f)) \geq \Gamma_\ell\}},$$

où $1_{\{.\}}$ représente la fonction indicateur et $f_{(.)}$ est une fonction certaine qui dépend de la nature de la matrice G. Dans cet exemple, la valeur $L_{MAX}$ peut être:

$$L_{MAX} = \max_f \sum_{\ell} 1_{\left\{G(\ell,f) \geq \frac{\Gamma_\ell}{P_{MAX}}\right\}},$$

où $P_{MAX}$ représente la puissance maximale transmise qu'un noeud peut utiliser.

Le chef de cluster réduit la matrice G en une matrice $G'$, en utilisant un procédé 300 d'élimination de colonne qui annule de la matrice G toutes les colonnes (i.e les canaux) qui ne satisfont pas $L_{MAX}$ liens.

Dans cet exemple, le canal sélectionné est donné, 302, en utilisant l'expression max-min suivante:

$$\begin{cases} \ell^* = \arg \min_{\ell} \left\{ \dfrac{\mathbf{G}'(\ell, f)}{\Gamma_\ell} \text{ tel que } \dfrac{P_{MAX}\, \mathbf{G}'(\ell, f)}{\Gamma_\ell} \geq 1 \right\} \\ f^* = \arg \max_f \dfrac{\mathbf{G}'(\ell^*, f)}{\Gamma_{\ell^*}} \end{cases},$$

i.e., le canal sélectionné est celui qui maximise le lien donnant la performance la plus mauvaise.

Le canal f* sera utilisé pour la communication par tous les liens appartenant au cluster. La puissance à attribuer pour chaque lien est sélectionnée, 303, en fonction de la nature du vecteur $I[f]$.

Dans cet exemple on peut utiliser la formule suivante :

$$P_\ell = \left\lceil \frac{\Gamma_\ell}{G'(\ell, f^*)} \right\rceil,$$

où l'opérateur $\lceil z \rceil$ de quantification donne la plus petite valeur de puissance quantifiée supérieure à z.

A chaque lien qui ne satisfait pas ce critère on assigne une puissance égale à zéro.

Tout ce qui vient d'être décrit pour la procédure de sélection de configuration dans le cadre de liens s'appliquent pour des noeuds d'un cluster.

Une procédure de **« contrôle de satisfaction »** 220 est utilisée par les liens pour demander de réévaluer une configuration de réseau. Cette procédure est utilisée par les liens qui sont mis à l'écart par le procédé. Si pour une raison quelconque, pour un nombre $n_a$ d'instants consécutifs, le noeud ne satisfait pas le critère $SINR < \Gamma_\ell$ alors il va transmettre une alarme, 201, vers la procédure de déclenchement d'alarme. Il est possible de fixer $n_a = 2$.

La suite de la description est donnée en prenant comme paramètre de mesure le rapport gain puissance/canal $Q_m^s$ pour déterminer la configuration optimale des noeuds du réseau. Une liste de canaux est prédéfinie par rapport à une configuration initiale d'un réseau et connue du chef de cluster.

Le chef du cluster k déclenche la procédure de requête d'information et demande à un noeud récepteur d'un lien de lui transmettre un vecteur contenant tous les rapports puissance de gain/bruit plus interférence $Q_m^s$ pour tous les canaux m possibles de la liste préétablie:

$$Q_m^k = (Q_m^k(1), Q_m^k(2), \dots, Q_m^k(C)),$$

où chaque élément du vecteur est défini comme :

$$Q_m^k(s) = \frac{G^s(m,m)}{\sigma^2 + MAI_{m,s}}$$

$G^s(m,m)$ représente le gain en puissance du canal du lien m appartenant au cluster $k$, pour le canal s, et $MAI_{m,s}$ est l'interférence d'accès multiple, définie comme :

$$MAI_{m,s} = \sum_{h\in K\backslash k} \mathbb{1}\{C_h = s\} \left( \sum_{l\in N_h} P_h G^s(l,m) \right)$$

où $G^s(l,m)$ représente le gain en puissance du canal entre l'émetteur du lien l et le récepteur du lien et $\mathbb{1}\{.\}$ correspond à une fonction indicateur standard. Chaque lien ou noeud du réseau comporte un module adapté à estimer la valeur $Q_m^k(s)$. Un noeud récepteur est adapté pour contrôler la qualité de la communication à chaque trame transmise, en mesurant la moyenne SINR d'un paquet. Cette valeur SINR est ensuite comparée à une valeur seuil de qualité de servie à respecter QoS.

Le chef de cluster dispose donc en fin de procédure de requête d'information d'un ensemble de valeurs $Q_m^s$.

Le niveau seuil de qualité de service mesure la performance minimale que noeud ou lien doit respecter. Par exemple, dans le cas d'une performance minimale par rapport à une valeur SINR : $SINR_m > \Gamma_m$,
avec $SINR_m$ , i.e., the average signal-to-noise ratio achieved from link m, défini comme:

$$SINR_m = \frac{P_m G^s(m,m)}{\sigma^2 + MAI_{m,s}},$$

où $P_m$ représente la puissance utilisée par le lien m pour la transmission.

L'un des objectifs du procédé selon l'invention est d'obtenir une valeur SINR plus grande ou égale que la valeur seuil $\Gamma_\ell$ en utilisant une valeur minimum de puissance.

Pour cela, le chef de cluster organise les vecteurs reçus $\boldsymbol{Q}_m^k$ dans une matrice G. $\mathbf{G}(\ell, f)$ indique l'élément sur la $\ell$ - th ligne (lien) et la f-ième colonne (canal) de la matrice, l'élément est égal au f- ième élément du vecteur $\boldsymbol{Q}_\ell^k$ :

$$\boldsymbol{G} = \begin{bmatrix} Q_1^k(1) & Q_1^k(2) & ... & Q_1^k(F) \\ Q_2^k(1) & ... & & \\ ... & & ... & \\ Q_{L_k}^k(1) & & & Q_{L_k}^k(F) \end{bmatrix}$$

Le chef de cluster évalue ensuite le nombre maximum de liens qui vont permettre de satisfaire les contraintes, par exemple

$$L_{MAX} = \max_f \sum_\ell 1\{P_{MAX}(G(\ell,f)) \geq \Gamma_\ell\}$$

La valeur de puissance $P_{MAX}$ est une valeur connue pour le réseau.

La fonction 1{..} est la fonction indicatrice qui vaut 1 lorsque la condition est vraie et 0 si la condition est fausse.

Le chef de cluster va ensuite effectuer une réduction de la taille de matrice G en une matrice G', en appliquant un procédé d'élimination de colonnes qui met à zéro toutes le colonnes de la matrice G, i.e les canaux, qui ne satisfont pas le critère $L_{MAX}$. C'est-à-dire que l'on ne trouve pas de maximum pour ces canaux. Pour les canaux sélectionnés qui vérifient les contraintes, on va choisir le canal optimal. Pour cela on utilise par exemple l'expression max-min suivante

$$\begin{cases} \ell^* = \arg\min_{\ell} \left\{ \dfrac{\mathbf{G}'(\ell, \mathrm{f})}{\Gamma_\ell} \text{ tel que } \dfrac{\mathrm{P}_{\mathrm{MAX}}\, \mathbf{G}'(\ell, \mathrm{f})}{\Gamma_\ell} \geq 1 \right\} \\ f^* = \arg\max_{f} \dfrac{\mathbf{G}'(\ell^*, f)}{\Gamma_{\ell^*}} \end{cases},$$

On choisit la valeur minimale du lien I* puis on choisit le canal f*

Le canal qui va être sélectionné est celui qui maximise la performance du lien le plus mauvais. Il est possible de satisfaire les contraintes QoS pour un nombre maximum de liens.

Le canal f* est ensuite utilisé par tous les liens appartenant au cluster k pour communiquer entre eux.

Le chef de cluster va ensuite attribuer à chaque lien une puissance pour la communication, par exemple la puissance pour un lien I sera choisie :

$$P_\ell = \left\lceil \dfrac{\Gamma_\ell}{\mathbf{G}'(\ell, \mathrm{f}^*)} \right\rceil,$$

où l'opérateur de quantification $\lceil z \rceil$ donne la plus petite valeur de puissance quantifiée supérieure à z. Les liens qui ne peuvent satisfaire cette contrainte, i.e, tous les liens $\ell$ tels que $P_{\mathrm{MAX}}\mathbf{G}'(\ell, \mathrm{f}^*) < \Gamma_\ell$, sont mis à zéro en leur attribuant une puissance nulle $P_\ell = 0$.

Les explications données précédemment s'appliquent lorsque l'on cherche à obtenir une configuration optimale pour un réseau comprenant un ou plusieurs clusters indépendants les uns des autres, chaque cluster comprenant un chef de cluster dont la fonction est de gérer la configuration des noeuds, et l'allocation des ressources. Une configuration peut être le choix des canaux logiques, des fréquences, la puissance utilisée pour les communications, le schéma de codage pour les transmissions de données. Les contraintes à respecter pourront être, par exemple, une valeur de SINR, une probabilité de réception de paquets erronés, l'optimisation d'un débit de transmission.

L'invention s'applique notamment dans les réseaux tactiques comprenant plusieurs clusters. Dans le cadre de situations tactiques, il est intéressant de pouvoir gérer les ressources des réseaux radio de manière distribuée ou localement centralisée pour minimiser la signalisation, la vulnérabilité, permettre un temps de réaction plus rapide.

Le procédé selon l'invention permet de déterminer conjointement une configuration de noeuds d'un réseau et une fréquence, ou canal logique. La configuration peut s'adapter grâce à des mesures réelles pour une configuration donnée d'un réseau.

**Revendications**

1. Procédé pour déterminer la configuration d'un ensemble de noeuds Ni et/ou liens regroupés au sein d'un cluster (10i) possédant un chef de cluster, CHk, au cluster étant associées une valeur de contrainte à vérifier et des ressources radio, le procédé est **caractérisé en ce qu'**il comporte au moins les étapes suivantes :

   a) connaissant un ensemble de canaux de fonctionnement, déclencher une requête d'information (202) en interrogeant un ou plusieurs noeuds Ni ou liens et demander auxdits noeuds ou auxdits liens d'évaluer pour chaque canal de communication un indice $I_I[c]$ de qualité de communication pour un noeud ou un lien entre deux noeuds du cluster (203), puis sélectionner une configuration (204) lorsque le chef de cluster a reçu les indices de qualité de communication des noeuds ou liens interrogés,
   b) le chef de cluster vérifie si les indices de qualité reçus sont conformes à une contrainte donnée pour le cluster, et retient les indices qui satisfont le plus grand nombre de noeuds Ni ou liens et déclenche une procédure de sélection de configuration (204),
   c) si la configuration retenue satisfait l'ensemble des noeuds Ni ou liens interrogés, alors le chef de cluster va mettre à jour (206) la liste c des canaux de communication et va communiquer (207) cette configuration pour les noeuds ou liens du cluster,
   d) si non, alors le chef de cluster va soit mettre à jour (211) la liste des canaux de communication, soit rester dans la configuration initiale de l'ensemble des noeuds ou liens.

2. Procédé selon la revendication 1 **caractérisé en ce que** la requête d'information (202) est déclenchée sur réception d'une alarme (201) au niveau du chef de cluster traduisant un nombre de noeuds ou liens du cluster non satisfaits (220) par la configuration choisie.

**3.** Procédé selon la revendication 2 **caractérisé en ce qu'**un noeud ou lien comptabilise le nombre de fois où l'indice de qualité mesuré ne permet pas de vérifier la contrainte requise et transmet une valeur d'alarme au chef de cluster si la valeur de la contrainte n'est pas vérifiée un nombre $n_a$ fois donné.

**4.** Procédé selon la revendication 1 **caractérisé en ce que** lorsque le chef de cluster ne trouve pas de configuration adaptée, d), alors, il vérifie s'il existe une autre configuration parmi plusieurs sous-ensembles de configuration prédéfinis, en testant les sous-ensembles selon un ordre de priorité donné.

**5.** Procédé selon la revendication 1 **caractérisé en ce que** la requête d'information (202) est déclenchée par une procédure de déclenchement hors alarme (231) en tirant une valeur aléatoire A uniformément répartie entre deux valeurs [0, 1] et si la valeur A est inférieure à une valeur de probabilité donnée, alors on déclenche la procédure de requête d'information.

**6.** Procédé selon la revendication 1 **caractérisé en ce que** la requête d'information (202) est déclenchée en utilisant un mode déterministe dans lequel on définit une loi de variation de probabilité pour le cluster k associée au déclenchement de requête d'information.

**7.** Procédé selon la revendication 6 **caractérisé en ce que** l'on utilise une loi de variation où $\Pi_k(t)=1$ à des instants déterminés et $\Pi_k(t)=0$ sinon avec $\Pi_k(t)$ la probabilité de déclencher une procédure de requête d'information pour le cluster k.

**8.** Procédé selon l'une des revendications précédentes **caractérisé en ce que** le chef de cluster demande aux noeuds ou liens de lui transmettre les rapports puissance de gain/bruit plus interférence $Q_m^s$ pour tous les canaux m possibles de la liste préétablie:

$$\boldsymbol{Q}_m^k = (Q_m^k(1), Q_m^k(2), \ldots, Q_m^k(F)),$$

où chaque élément du vecteur est défini comme :

$$Q_m^k(s) = \frac{G^s(m,m)}{\sigma^2 + MAI_{m,s}}$$

$G^s(m,m)$ représente le gain en puissance du canal du lien m appartenant au cluster *k,* pour le canal s, et $MAI_{m,s}$ l'interférence d'accès multiple, définie comme

$$MAI_{m,s} = \sum_{h \in K\backslash k} \mathbb{1}\{C_h = s\} \left( \sum_{l \in N_h} P_h G^s(l,m) \right).$$

où $G^S(l,m)$ représente le gain en puissance du canal entre l'émetteur du lien l et le récepteur du lien et 1{.} correspond à une fonction indicateur standard, à partir des vecteurs reçus $\boldsymbol{Q}_m^k$ le chef de cluster organise les vecteurs reçus $\boldsymbol{Q}_m^k$ dans une matrice G, **G**($\ell$,f) indique l'élément sur la $\ell$-ème ligne (lien) et la f-ième colonne (canal) de la matrice, l'élément est égal au f-ième élément du vecteur $\boldsymbol{Q}_\ell^k$:

$$\boldsymbol{G} = \begin{bmatrix} Q_1^k(1) & Q_1^k(2) & \ldots & Q_1^k(F) \\ Q_2^k(1) & \ldots & & \\ \ldots & & \ldots & \\ Q_{L_k}^k(1) & & & Q_{L_k}^k(F) \end{bmatrix}$$

après, il évalue le nombre maximum de liens adapté à satisfaire la qualité de service,

$$L_{MAX} = \max_f \sum_\ell 1\{P_{MAX} G(\ell, f) \geq \Gamma_\ell\}.$$

la matrice G' est ensuite construite en mettant à zéro toutes le colonnes de G où $\sum_\ell 1\{P_{MAX}G(\ell, f) \geq \Gamma_\ell\} < L_{MAX}$, le chef de cluster choisit ensuite une valeur particulière f* en fonction des besoins du réseau ainsi que la configuration $c_\ell$ pour chaque lien $\ell$ à partir de la matrice $G(\ell, f^*)$.

9. Procédé selon la revendication 8 **caractérisé en ce que** le chef de cluster utilise un critère min-max, il sélectionne la valeur minimale du lien $\ell^*$ et le canal f* en utilisant l'expression :

$$\begin{cases} \ell^* = \arg\min_\ell \left\{ \dfrac{\mathbf{G}'(\ell, f)}{\Gamma_\ell} \text{ tel que } \dfrac{P_{MAX}\,\mathbf{G}'(\ell, f)}{\Gamma_\ell} \geq 1 \right\} \\ f^* = \arg\max_f \dfrac{\mathbf{G}'(\ell^*, f)}{\Gamma_{\ell^*}} \end{cases},$$

puis le chef de cluster attribue à chaque lien une puissance pour la communication:

$$P_\ell = \left\lceil \frac{\Gamma_\ell}{\mathbf{G}'(\ell, f^*)} \right\rceil,$$

où l'opérateur de quantification $\lceil . \rceil$ donne la plus petite valeur de puissance quantifiée supérieure à $\Gamma_\ell/(\mathbf{G}'(\ell, f^*))$.

10. Procédé selon la revendication 8 ou 9 **caractérisé en ce que** les liens $\ell$ tels que $P_{MAX}\mathbf{G}'(\ell, f^*) < \Gamma_\ell$, sont mis à zéro en leur attribuant une puissance nulle $P_\ell = 0$.

11. Procédé selon l'une des revendications 1 à 10 **caractérisé en ce que** la contrainte à vérifier est une qualité de service.

12. Procédé selon l'une des revendications 1 à 11 pour la configuration de noeuds ou de liens dans un réseau mobile ad-hoc.


**Patentansprüche**

1. Verfahren zum Feststellen der Konfiguration eines Satzes von Knoten Ni und/oder Verbindungen, die im Innern eines Clusters (10i) gruppiert sind, das ein Hauptcluster CHk besitzt, wobei mit dem Cluster ein zu verifizierender Beschränkungswert und Funkressourcen assoziiert sind, wobei das Verfahren **dadurch gekennzeichnet ist, dass** es wenigstens die folgenden Schritte beinhaltet:

a) Auslösen, in Kenntnis eines Satzes von Betriebskanälen, einer Informationsanforderung (202) durch Abfragen von einem/r oder mehreren Knoten Ni oder Verbindungen und Auffordern der Knoten oder Verbindungen, für jeden Kommunikationskanal einen Kommunikationsqualitätsindex $I_l[c]$ für einen Knoten oder eine Verbindung zwischen zwei Knoten des Clusters (203) zu beurteilen, dann eine Konfiguration (204) zu wählen, wenn das Hauptcluster die Kommunikationsqualitätsindexe von den abgefragten Knoten oder Verbindungen erhalten hat,
b) durch das Hauptcluster: Verifizieren, ob die empfangenen Qualitätsindexe eine für das Cluster gegebene Beschränkung erfüllen, und Behalten der Indexe, die die größte Anzahl von Knoten Ni oder Verbindungen erfüllen, und Auslösen eines Verfahrens zum Auswählen einer Konfiguration (204),
c) durch das Hauptcluster: Aktualisieren (206), wenn die behaltene Konfiguration den Satz von abgefragten Knoten Ni oder Verbindungen erfüllt, der Liste c der Kommunikationskanäle, und Übermitteln (207) dieser Konfiguration für die Knoten oder Verbindungen des Clusters,
d) wenn nicht, durch das Hauptcluster: entweder Aktualisieren (211) der Liste der Kommunikationskanäle oder Lassen des Satzes von Knoten oder Verbindungen in der Anfangskonfiguration.

2. Verfahren nach Anspruch 1, **dadurch gekennzeichnet, dass** die Informationsanforderung (202) nach Empfang eines Alarms (201) am Hauptcluster unter Umsetzung einer Anzahl von nicht erfüllenden Knoten oder Verbindungen des Clusters (220) um die gewählte Konfiguration ausgelöst wird.

3. Verfahren nach Anspruch 2, **dadurch gekennzeichnet, dass** ein Knoten oder eine Verbindung feststellt, wie oft der gemessene Qualitätsindex keine Verifizierung der geforderten Beschränkung zulässt, und einen Alarmwert zum Hauptcluster sendet, wenn der Wert der Beschränkung eine gegebene Häufigkeit $n_a$ nicht verifiziert hat.

4. Verfahren nach Anspruch 1, **dadurch gekennzeichnet, dass** das Hauptcluster, wenn es keine adaptierte Konfiguration findet, d) dann verifiziert, ob eine andere Konfiguration unter mehreren vordefinierten Konfigurationsteilsätzen existiert, durch Prüfen der Teilsätze gemäß einer gegebenen Prioritätsfolge.

5. Verfahren nach Anspruch 1, **dadurch gekennzeichnet, dass** die Informationsanforderung (202) durch einen Auslösevorgang ohne Alarm (231) mit einem zufälligen Wert A ausgelöst wird, der gleichmäßig zwischen zwei Werten [0, 1] verteilt ist, und wenn der Wert A kleiner ist als ein gegebener Wahrscheinlichkeitswert, das Informationsanforderungsverfahren ausgelöst wird.

6. Verfahren nach Anspruch 1, **dadurch gekennzeichnet, dass** die Informationsanforderung (202) durch Benutzen eines deterministischen Modus ausgelöst wird, in dem ein Wahrscheinlichkeitsvariationsgesetz für das mit dem Auslösen der Informationsanforderung assoziierte Cluster k definiert wird.

7. Verfahren nach Anspruch 6, **dadurch gekennzeichnet, dass** ein Variationsgesetz benutzt wird, bei dem zu bestimmten Zeitpunkten $\pi_k(t)=1$ ist, und andernfalls $\pi_k(t)=0$, wobei $\pi_k(t)$ die Wahrscheinlichkeit der Auslösung eines Informationsanforderungsverfahrens für das Cluster k ist.

8. Verfahren nach einem der vorherigen Ansprüche, **dadurch gekennzeichnet, dass** das Hauptcluster die Knoten oder Verbindungen auffordert, ihm die Verstärkung/Rauschen-plus-Interferenz-Leistungsverhältnisse $Q_m^s$ für alle möglichen m Kanäle der zuvor festgelegten Liste zu übertragen:

$$\boldsymbol{Q}_m^k = (Q_m^k(1), Q_m^k(2), \dots, Q_m^k(F)),$$

wobei jedes Element des Vektors wie folgt definiert ist: $G^S$(m, m) $\quad Q_m^k(s) = \dfrac{G^s(m,m)}{\sigma^2 + MAI_{m,s}}$ $\quad G^S$(m,m) die Leistungsverstärkung des Kanals der Verbindung m repräsentiert, die zum Cluster $k$ gehört, für den Kanal s, und $MAI_{m,s}$ die Mehrfachzugriffsinterferenz ist, definiert als

$$MAI_{m,s} = \sum_{h \in K \backslash k} \mathbb{1}\{C_h = s\} \left( \sum_{l \in N_h} P_h G^s(l, m) \right),$$

wobei $G^s$(l, m) die Leistungsverstärkung des Kanals zwischen dem Sender der Verbindung I und dem Empfänger der Verbindung ist und 1{ . } einer standardmäßigen Indikatorfunktion entspricht,

auf der Basis der empfangenen Vektoren $\boldsymbol{Q}_m^k$ das Hauptcluster die empfangenen Vektoren $\boldsymbol{Q}_m^k$ in einer Matrix G organisiert, $\mathbf{G}(\ell,$ f) das Element auf der $\ell$-ten Reihe (Verbindung) und der f-ten Spalte (Kanal) der Matrix anzeigt, wobei das Element gleich dem f-ten Element des Vektors $\boldsymbol{Q}_\ell^k$ ist:

$$\boldsymbol{G} = \begin{bmatrix} Q_1^k(1) & Q_1^k(2) & \dots & Q_1^k(F) \\ Q_2^k(1) & \dots & & \\ \dots & & \dots & \\ Q_{L_k}^k(1) & & & Q_{L_k}^k(F) \end{bmatrix}$$

danach die maximale Anzahl von adaptierten Verbindungen beurteilt wird, die die Dienstgüte erfüllen:

$$L_{MAX} = \max_f \sum_\ell 1\{P_{MAX} G(\ell, f) \geq \Gamma_\ell\}.$$

die Matrix G' dann konstruiert wird, indem alle Spalten von G auf null gesetzt werden, wobei $\sum_\ell 1\{P_{MAX}G(\ell,f) \geq \Gamma_\ell\} < L_{MAX}$ ist,

das Hauptcluster dann einen bestimmten Wert f* in Abhängigkeit von den Erfordernissen des Netzes sowie der Konfiguration $c_\ell$ für jede Verbindung $\ell$ auf der Basis der Matrix $G(\ell, f^*)$ wählt.

9. Verfahren nach Anspruch 8, **dadurch gekennzeichnet, dass** das Hauptcluster ein Min-Max-Kriterium nutzt und den Mindestwert der Verbindung ℓ* und den Kanal f* unter Verwendung des folgenden Ausdrucks wählt:

$$\begin{cases} \ell^* = \arg\min_\ell \left\{ \dfrac{\mathbf{G}'(\ell, f)}{\Gamma_\ell} \text{ so dass } \dfrac{P_{MAX}\, \mathbf{G}'(\ell, f)}{\Gamma_\ell} \geq 1 \right\} \\ f^* = \arg\max_f \dfrac{\mathbf{G}'(\ell^*, f)}{\Gamma_{\ell^*}} \end{cases},$$

dann das Hauptcluster jeder Verbindung eine Leistung für die folgende Kommunikation zuordnet:

$$P_\ell = \left\lceil \frac{\Gamma_\ell}{\mathbf{G}'(\ell, f^*)} \right\rceil,$$

wobei der Quantifikationsoperator ⌈.⌉ den kleinsten quantifizierten Leistungswert größer als $\Gamma_\ell/(\mathbf{G}'(\ell, f^*))$ gibt.

10. Verfahren nach Anspruch 8 oder 9, **dadurch gekennzeichnet, dass** die Verbindungen ℓ wie $P_{MAX}\mathbf{G}'(\ell, f^*) < \Gamma_\ell$ auf null gesetzt werden, indem ihnen eine Nullleistung $P_\ell = 0$ zugeordnet wird.

11. Verfahren nach einem der Ansprüche 1 bis 10, **dadurch gekennzeichnet, dass** die zu verifizierende Beschränkung eine Dienstgüte ist.

12. Verfahren nach einem der Ansprüche 1 bis 11 für die Konfiguration von Knoten oder Verbindungen in einem Adhoc-Mobilfunknetz.

## Claims

1. Method for determining the configuration of a set of nodes Ni and/or links grouped together within a cluster (10i) possessing a cluster head, CHk, with the cluster there being associated a constraint value to be satisfied and radio resources, the method is **characterized in that** it comprises at least the following steps:

   a) given a set of operating channels, triggering an information request (202) by interrogating one or more nodes Ni or links and asking the said nodes or the said links to evaluate for each communication channel an index $I_l[c]$ of communication quality for a node or a link between two nodes of the cluster (203), and then selecting a configuration (204) when the cluster head has received the indices of communication quality of the interrogated nodes or links,
   b) the cluster head verifies whether the indices of quality received comply with a given constraint for the cluster, and retains the indices which satisfy the largest number of nodes Ni or links and triggers a configuration selection procedure (204),
   c) if the configuration retained satisfies the set of nodes Ni or links interrogated, then the cluster head will update (206) the list c of communication channels and will communicate (207) this configuration for the nodes or links of the cluster,
   d) if not, then the cluster head will either update (211) the list of communication channels, or remain in the initial configuration of the set of nodes or links.

2. Method according to Claim 1, **characterized in that** the information request (202) is triggered on receipt of an alarm (201) at the level of the cluster head expressing a number of nodes or links of the cluster that are not satisfied (220) by the chosen configuration.

3. Method according to Claim 2, **characterized in that** a node or link counts up the number of times that the measured index of quality does not make it possible to satisfy the required constraint and transmits an alarm value to the cluster head if the value of the constraint is not satisfied a given number $n_a$ times.

4. Method according to Claim 1, **characterized in that** when the cluster head does not find any suitable configuration, d), then, it verifies whether there exists another configuration from among several configuration subsets that are predefined, by testing the subsets according to a given order of priority.

5. Method according to Claim 1, **characterized in that** the information request (202) is triggered by an off-alarm triggering procedure (231) by drawing a random value A uniformly distributed between two values [0, 1] and if the value A is less than a given probability value, then the information request procedure is triggered.

6. Method according to Claim 1, **characterized in that** the information request (202) is triggered using a deterministic mode in which a probability variation law, associated with the information request triggering, is defined for the cluster k.

7. Method according to Claim 6, **characterized in that** a variation law is used where $\Pi_k(t)=1$ at determined instants and $\Pi_k(t)=0$ otherwise with $\Pi_k(t)$ the probability of triggering an information request procedure for the cluster k.

8. Method according to one of the preceding claims, **characterized in that** the cluster head asks the nodes or links to transmit to it the gain/noise plus interference power ratios Qm for all the possible channels m of the preestablished list:

$$\boldsymbol{Q}_m^k = (Q_m^k(1), Q_m^k(2), \dots, Q_m^k(F)),$$

where each element of the vector is defined as:

$$Q_m^k(s) = \frac{G^s(m,m)}{\sigma^2 + MAI_{m,s}}$$

$G^s(m,m)$ represents the gain in power of the channel of the link m belonging to the cluster *k*, for the channel s, and $MAI_{m,s}$ the multiple access interference, defined as

$$MAI_{m,s} = \sum_{h \in K \setminus k} \mathbb{1}\{C_h = s\} \left( \sum_{l \in N_h} P_h G^s(l,m) \right).$$

where $G^s(l,m)$ represents the gain in power of the channel between the sender of the link I and the receiver of the link and 1{.} corresponds to a standard indicator function,

on the basis of the vectors received $\boldsymbol{Q}_m^k$, the cluster head organizes the vectors received $\boldsymbol{Q}_m^k$ in a matrix G, **G**($\ell$, f) indicates the element in the $\ell$-th row (link) and the f-th column (channel) of the matrix, the element is equal to the f-th element of the vector $\boldsymbol{Q}_\ell^k$:

$$G = \begin{bmatrix} Q_1^k(1) & Q_1^k(2) & \dots & Q_1^k(F) \\ Q_2^k(1) & \dots & & \\ \dots & & \dots & \\ Q_{L_k}^k(1) & & & Q_{L_k}^k(F) \end{bmatrix}$$

afterwards, it evaluates the maximum number of links which is suitable for satisfying the quality of service,

$$L_{MAX} = \max_{f} \sum_{\ell} 1\{P_{MAX}G(\ell,f) \geq \Gamma_{\ell}\}.$$

the matrix G' is thereafter constructed by zeroing all the columns of G where $\sum_{\ell} 1\{P_{MAX}G(\ell,f) \geq \Gamma_{\ell}\} < L_{MAX}$, the cluster head thereafter chooses a particular value f* as a function of the needs of the network as well as the configuration $c_{\ell}$ for each link $\ell$ on the basis of the matrix $G(\ell,f^*)$.

9. Method according to Claim 8, **characterized in that** the cluster head uses a min-max criterion, it selects the minimum value of the link $\ell$* and the channel f* by using the expression:

$$\begin{cases} \ell^* = \arg\min_{\ell} \left\{ \dfrac{\mathbf{G}'(\ell,f)}{\Gamma_{\ell}} \text{ such as } \dfrac{P_{MAX}\,\mathbf{G}'(\ell,f)}{\Gamma_{\ell}} \geq 1 \right\} \\ f^* = \arg\max_{f} \dfrac{\mathbf{G}'(\ell^*,f)}{\Gamma_{\ell^*}} \end{cases},$$

and then the cluster head allots each link a power for the communication:

$$P_{\ell} = \left\lceil \dfrac{\Gamma_{\ell}}{\mathbf{G}'(\ell,f^*)} \right\rceil,$$

where the quantization operator $\lceil . \rceil$ gives the smallest quantized value of power greater than $\Gamma_{\ell}/(\mathbf{G}'(\ell,f^*))$.

10. Method according to Claim 8 or 9, **characterized in that** the links $\ell$ such that $P_{MAX}\mathbf{G}'(\ell,f^*) < \Gamma_{\ell}$ are set to zero by allotting them a zero power $P_{\ell} = 0$.

11. Method according to one of Claims 1 to 10, **characterized in that** the constraint to be satisfied is a quality of service.

12. Method according to one of Claims 1 to 11, for the configuration of nodes or links in an ad-hoc mobile network.

FIG.1

EP 2 790 460 B1

FIG.2

17

A partir des nœuds

[G]

Mise à zero de colonnes dans la matrice

300

$\Gamma$ → Evaluation nombre d'utilisateurs satisfaits

301

[G']

Sélection canal Max-min

302

f* → Vers les noeuds

Evaluation vecteur puissance

[p]

303

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120071102 A
- WO 2009018251 A
- WO 2013000068 A

**Littérature non-brevet citée dans la description**

- **HO TING CHENG et al.** *Pareto Optimal Resource Management for Wireless Mesh Networks with QoS Assurance : Joint Node Clustering and Subcarrier Allocation*